# EUROPÄISCHE PATENTSCHRIFT

(11) **EP 2 938 422 B1**
(45) Veröffentlichungstag und Bekanntmachung des Hinweises auf die Patenterteilung: **07.10.2020**
(21) Anmeldenummer: 13814161.9
(22) Anmeldetag: 23.12.2013
(51) Int. Cl.: A23L 27/10, A23L 27/12, B01D 53/04, C11B 9/02

(54) **VERFAHREN ZUR GEWINNUNG VON AROMASTOFFEN**
METHOD FOR EXTRACTING AROMATICS
PROCÉDÉ DESTINÉ AU GAIN DE MATIÈRES AROMATIQUES

(30) Priorität: 28.12.2012 EP 12199726
(43) Veröffentlichungstag der Anmeldung: 04.11.2015
(73) Patentinhaber: Clariant International Ltd, 4132 Muttenz (CH)
(72) Erfinder: ZAVREL, Michael, 82140 Olching (DE); DENNEWALD, Dannielle, 80798 München (DE); HOFMANN, Sandra, 83703 Gmund am Tegernsee (DE)
(74) Vertreter: Graser, Konstanze
(86) Internationale Anmeldenummer: PCT/EP2013/077899
(87) Internationale Veröffentlichungsnummer: WO 2014/102238

(56) Entgegenhaltungen:
- EP-A1- 2 168 656
- EP-A1- 2 468 874
- EP-A1- 2 532 411
- US-A- 4 343 623
- US-A- 4 487 614
- US-A- 5 256 173
- US-A- 5 271 914
- US-A- 5 910 292
- US-A- 6 099 619
- US-B2- 6 402 813

## Beschreibung

Die vorliegende Erfindung betrifft ein Verfahren zur Gewinnung von Aromastoffen. Aromastoffe werden vor allem in der Lebensmittelindustrie häufig eingesetzt, um die sensorische Qualität von Produkten zu verändern. Dabei wird ein jährlich steigender Bedarf insbesondere an natürlichen Aromastoffen gemessen, da die Verbraucher zunehmend kritisch auf den Einsatz künstlicher Aromastoffe reagieren. Natürliche Aromastoffe werden beispielsweise aus pflanzlichen Rohstoffen unter Verwendung organischer Lösungsmittel wie Alkoholen oder Ketonen extrahiert. Derartige Verfahren sind im Stand der Technik weitreichend bekannt.

Nachteilig ist bei diesen Verfahren, dass einerseits die zur Extraktion eingesetzten Lösungsmittel zusätzliche Kosten darstellen und diese zudem vor der Zugabe der Aromastoffe durch energetisch aufwendige Destillation oder Verdampfung aus dem Extrakt abgetrennt werden müssen.

Ein weiteres Verfahren zur Gewinnung natürlicher Aromastoffe, das ohne den Einsatz von organischen Lösungsmitteln auskommt, wird in der EP 1 916 294 beschrieben. Hierbei wird ein pflanzlicher Ausgangsstoff unter Vakuum gesetzt und auf eine Temperatur erhitzt, die oberhalb des Siedepunkts von Wasser liegt. Die Aromastoffe werden zusammen mit dem in die Gasphase übergehenden Wasser aus dem Ausgangsstoff extrahiert.

Dieses Verfahren ist aufgrund der prozesstechnisch aufwendigen Schritte großtechnisch unter wirtschaftlichen Gesichtspunkten problematisch. Zudem wird eine große Menge an Wasser mit abgetrennt, das vor dem Einsatz der Aromastoffe aufwendig abgetrennt werden muss.

Ein anderes Konzept zur Gewinnung von organischen Molekülen aus fermentierten Flüssigkeiten wird in EP 2 168 656 A1 beschrieben.

Die Erfinder der vorliegenden Anmeldung haben sich daher die Aufgabe gestellt, ein Verfahren zu entwickeln, das die im Stand der Technik bekannten Nachteile nicht aufweist und die Gewinnung insbesondere von natürlichen Aromastoffen ermöglicht, die auf einfache Art und Weise gewünschten Produkten zugesetzt, oder, nach Abtrennung unerwünschter Komponenten von den Aromastoffen, den Ausgangsstoffen wiederum zugesetzt werden können.

Es wurde nun überraschend gefunden, dass diese Aufgabe durch ein Verfahren gemäss Anspruch 1 gelöst werden kann, bei dem die Aromastoffe aus einer gasförmigen Zusammensetzung enthaltend mindestens einen Aromastoff gewonnen werden. Ein Schritt des erfindungsgemässen Verfahrens umfasst das
- (A1): In-Kontakt-Bringen einer gasförmigen Zusammensetzung enthaltend mindestens einen Aromastoff mit einem Adsorber, wobei der Adsorber ein Molekularsieb mit einem Porendurchmesser von höchstens 8 Å umfasst.

Unter dem Begriff "Gewinnung" wird im Rahmen der vorliegenden Erfindung die Erlangung von mindestens einem Aromastoff verstanden, der nach Durchführung des erfindungsgemäßen Verfahrens in der gasförmigen Zusammensetzung in reinerer Form als ursprünglich eingesetzt vorliegt und/oder der nach Durchführung des erfindungsgemäßen Verfahrens eine erhöhte Verfügbarkeit besitzt.

Unter dem Begriff "In-Kontakt-Bringen" wird im Rahmen von Schritt (A1) des erfindungsgemäßen Verfahrens jede Art des In-Kontakt-Bringens verstanden, die dem Fachmann als für den erfindungsgemäßen Zweck geeignet erscheint. Bevorzugt erfolgt das In-Kontakt-Bringen im Rahmen von Schritt (A1) durch das Durchleiten der gasförmigen Zusammensetzung durch eine (oder mehrere) Säule(n) enthaltend den Adsorber. Vorzugsweise werden mehrere, besonders bevorzugt 2 bis 6 Säulen verwendet. Diese Säulen können in Reihe oder parallel geschalten sein.

Dabei können die Säulen das gleiche oder ein unterschiedliches Adsorbermaterial enthalten. Der Anteil des Molekularsiebs mit einem Porendurchmesser von höchstens 8 Å liegt im Rahmen einer bevorzugten Ausführungsform bei mindestens 10 Gew.-% bezogen auf das Gesamtgewicht des Adsorbers, bevorzugt bei mindestens 25 Gew.-%, weiter bevorzugt bei mindestens 50 Gew.-%, besonders bevorzugt bei mindestens 75 Gew.-%, insbesondere bei mindestens 90 Gew.-% und am meisten bevorzugt bei mindestens 95 Gew.-%. Dabei ist es ebenfalls besonders bevorzugt, dass der Anteil des Molekularsiebs mit einem Porendurchmesser von höchstens 8 Å (oder höchstens 7,5 Å, höchstens 7 Ä, höchstens 6,5 Å, bzw. in den nachfolgend als besonders bevorzugt genannten Bereichen des Porendurchmessers) bei mindestens 90 Gew.-%, bevorzugt mindestens 95 Gew.-%, besonders bevorzugt 100 Gew.-% bezogen auf das Gesamtgewicht des Adsorbers liegt. Desweiteren ist es bevorzugt, wenn der Anteil des Molekularsiebs mit einem Porendurchmesser von höchstens 8 Å (oder höchstens 7,5 Å, höchstens 7 Å, höchstens 6,5 Å, bzw. in den nachfolgend als besonders bevorzugt genannten Bereichen des Porendurchmessers) im Bereich von 25 bis 100 Gew.-% bezogen auf das Gesamtgewicht des Adsorbers, bevorzugt im Bereich von 50 bis 100 Gew.-%, weiter bevorzugt im Bereich von 75 bis 100 Gew.-% und am meisten bevorzugt im Bereich von 90 bis 100 Gew.-% bezogen auf das Gesamtgewicht des Adsorbers gewählt wird.

In einer weiteren bevorzugten Ausführungsform liegt das Massenverhältnis des Molekularsiebs mit einem Porendurchmesser von höchstens 8 Å zu adsorbierten Verbindungen vorzugsweise im Bereich von 1 bis 1000, weiter bevorzugt von 2 bis 500, insbesondere bevorzugt von 3 bis 200, ebenfalls besonders bevorzugt von 4 bis 100 und am meisten bevorzugt im Bereich von 5 bis 50. Dies gilt insbesondere, wenn unter den adsorbierten Verbindungen kurzkettige Alkohole enthalten sind. Unter dem Begriff "kurzkettiger Alkohol" wird im Rahmen der vorliegenden Erfindung jeder Alkohol verstanden, der 1 bis 3 Kohlenstoffatome aufweist, beispielsweise Methanol oder Ethanol, und flüchtig ist.

Unter dem Begriff "Molekularsieb" wird im Rahmen des erfindungsgemäßen Verfahrens ein Material verstanden, das ein starkes Adsorptionsvermögen für Gase und Dämpfe mit bestimmten Molekülgrößen hat. Durch geeignete Wahl des Molekularsiebs ist es möglich, Moleküle verschiedener Größen zu trennen. In einer bevorzugten Ausführungsform handelt es sich bei dem Molekularsieb um ein Molekularsieb, das bei einer Temperatur von 40°C und einem Druck von 101,3 kPa (1,013 bar) absolut mindestens die zweifache Masse, bevorzugt die 2,5fache Masse und besonders bevorzugt die dreifache Masse an kurzkettigen Alkoholen im Vergleich zu Wasser aus einer wässrigen alkoholischen Lösung bindet, wenn es sich bei der wässrigen alkoholischen Lösung um eine wässrige Lösung von mindestens 50 g/L kurzkettigen Alkoholen handelt. Bevorzugt wird eine gasförmige Mischung bestehend aus kurzkettigen Alkoholen und Wasser aus der wässrigen alkoholischen Lösung durch Stripping oder Verdampfen erzeugt. Insbesondere bevorzugt ist es dabei, dass mindestens 50% der in der wässrigen alkoholischen Lösung vorhandenen, kurzkettigen Alkohole an das Molekularsieb gebunden werden können. Diese Eigenschaften des Molekularsiebs können bestimmt werden, indem 500 mL einer wässrigen alkoholischen Lösung enthaltend mindestens 50 g/L des kurzkettigen Alkohols für 24 Stunden bei einem Druck von 101,3 kPa (1,013 bar) und einer Temperatur von 30°C mit 1 L Inertgasvolumen pro Minute gestrippt werden und der mit dem kurzkettigen Alkohol angereicherte Gasstrom durch eine Säule, die mit 200 g des Molekularsiebs gefüllt ist, geleitet wird. Der an dem kurzkettigen Alkohol abgereicherte Gasstrom wird zurückgeführt. Über eine Gewichtsbestimmung des Molekularsiebs vor und nach dem Versuch wird die insgesamt aufgenommene Masse bestimmt. Der Anteil an Wasser kann durch Karl-Fischer-Titration bestimmt werden. Der Rest der gebundenen Masse ist auf den adsorbierten kurzkettigen Alkohol zurückzuführen. Bevorzugt wird eine wässrige alkoholische Lösung bestehend aus 50 g/l Ethanol in Wasser verwendet.

In einer besonders bevorzugten Ausführungsform umfasst das Molekularsieb mindestens einen Zeolithen mit einem molaren SiO₂/Al₂O₃-Verhältnis von mindestens 50, bevorzugt mindestens 150, weiter bevorzugt mindestens 300, insbesondere bevorzugt mindestens 600, besonders bevorzugt mindestens 900 und am meisten bevorzugt mindestens 1200. Desweiteren ist es bevorzugt, wenn das molare SiO₂/Al₂O₃-Verhältnis des Zeolithen im Bereich 50 bis 1200, bevorzugt 100 bis 1200, weiter bevorzugt 300 bis 1200 und am meisten bevorzugt 600 bis 1200 gewählt wird. Der Anteil des Zeolithen an dem Molekularsieb liegt im Rahmen einer bevorzugten Ausführungsform bei mindestens 10 Gew.-% bezogen auf das Gesamtgewicht des Molekularsiebs, bevorzugt bei mindestens 25 Gew.-%, weiter bevorzugt bei mindestens 50 Gew.-%, besonders bevorzugt bei mindestens 75 Gew.-%, insbesondere bei mindestens 90 Gew.-% und am meisten bevorzugt bei mindestens 95 Gew.-%. Dabei ist es ebenfalls besonders bevorzugt, dass der Anteil des Zeolithen bei 100 Gew.-% bezogen auf das Gesamtgewicht des Adsorbers liegt. Desweiteren ist es bevorzugt, wenn der Anteil des Zeolithen an dem Molekularsieb im Bereich von 25 bis 100 Gew.-% bezogen auf das Gesamtgewicht des Molekularsiebs, bevorzugt im Bereich von 50 bis 100 Gew.-%, weiter bevorzugt im Bereich von 75 bis 100 Gew.-% und am meisten bevorzugt im Bereich von 90 bis 100 Gew.-% gewählt wird.

Besonders bevorzugt sind Zeolithe des beta- oder MFI-Typs.

Weitere mögliche Bestandteile des Adsorbers können im Rahmen der vorliegenden Erfindung ausgewählt werden aus der Gruppe bestehen aus Silica, Bentonite, Silicalite, Tone, Hydrotalcite, Aluminiumsilikate, Oxidpulver, Glimmer, Gläser, Aluminate, Clinoptolite, Gismondine, Quartze, Aktivkohlen, Knochenkohle, Montmorillonite, Polystyrole, Polyurethane, Polyacrylamide, Polymethacrylate oder Polyvinylpyridine.

Bei dem Begriff "gasförmige Zusammensetzung" handelt es sich im Rahmen der vorliegenden Erfindung bevorzugt um Luft oder einen oder mehrere Einzelbestandteile von Luft, wie Stickstoff, Kohlendioxid und/oder Sauerstoff. Ebenfalls bevorzugt handelt es sich bei der gasförmigen Zusammensetzung um Fermentationsgase, wobei sich diese beispielsweise durch einen gegenüber Luft erhöhten Kohlendioxidanteil auszeichnen. Im Falle einer aeroben Fermentation ist es dabei möglich, dass das Fermentationsgas einen gegenüber Luft um mindestens 2 Vol.-% erhöhten Anteil an Kohlendioxid aufweist, im Fall einer anaeroben Fermentation ist es dabei möglich, dass der Volumenanteil von Kohlendioxid bei mindestens 90 Vol.-% liegt. Fermentationsgas(e) als "gasförmige Zusammensetzung" ist insbesondere in dem Fall bevorzugt, dass es sich bei der in Schritt (A0) genannten Flüssigkeit um eine fermentierte Flüssigkeit handelt, wobei es besonders bevorzugt ist, dass es sich bei der gasförmigen Zusammensetzung um das Fermentationsgas handelt, das während der Fermentation der in Schritt (A0) genannten Flüssigkeit entsteht, wenn als Flüssigkeit eine fermentierte Flüssigkeit gewählt wird. In diesem Fall ist die Wahl von Fermentationsgas als gasförmige Zusammensetzung besonders vorteilhaft, da keine zusätzlichen Kosten und Prozessschritte anfallen, um die gasförmige Zusammensetzung bereitzustellen. Eine Zusammensetzung wird im Rahmen der vorliegenden Erfindung dann als "gasförmig" bezeichnet, wenn deren Teilchen sich in großem Abstand voneinander frei bewegen und den verfügbaren Raum gleichmäßig ausfüllen. Im Vergleich zum festen oder flüssigen Aggregatszustand nimmt die gleiche Masse im gasförmigen Zustand unter Normalbedingungen den rund tausend- bis zweitausendfachen Raum ein.

Unter dem Begriff "Aromastoff" werden im Rahmen der vorliegenden Erfindung chemisch definierte Stoffe mit Aromaeigenschaften verstanden. Insbesondere bezeichnet der Begriff "Aromastoff" im Rahmen der vorliegenden Erfindung flüchtige Verbindungen zum Einsatz in Lebensmitteln, die mit den Geruchsrezeptoren wahrgenommen werden, entweder direkt durch die Nase oder über den Rachenraum. Bei Aromastoffen kann es sich beispielsweise um Alkohole, Aldehyde, Ketone, Ester, Lactone, Sulfide und Heterocyclen (z.B. Furanverbindungen, Pyrazine, Thiazole und Thiophene) handeln. Derzeit für den Einsatz in Lebensmitteln in der Europäischen Union zugelassene Aromastoffe, wie sie ebenfalls im Rahmen der vorliegenden Erfindung unter dem Begriff "Aromastoff" subsumiert werden, sind beispielsweise in der Aromenverordnung (Artikel 22 d. Verordnung zur Neuordnung lebensmittelrechtlicher Kennzeichnungsvorschriften) referenziert (§1 (1) Begriffsbestimmung) und in der Entscheidung der Kommission der Europäischen Gemeinschaften vom 23. Februar 1999 (Amtsblatt der Europäischen Gemeinschaften vom 27.3.1999, DE, L 84/1) sowie der Durchführungsverordnung (EU) Nr. 872/2012 der Kommission vom 1. Oktober 2012 (Amtsblatt der Europäischen Gemeinschaften vom 2.10.2012, DE, L 267/1) gelistet. Der Inhalt dieser Dokumente wird durch Bezugnahme in den Offenbarungsgehalt der vorliegenden Anmeldung aufgenommen.

Generell lassen sich Aromastoffe in zwei Unterkategorien unterteilen:
Synthetische Aromastoffe entstehen mithilfe synthetischer Verfahren. Bei ihnen handelt es sich entweder um naturidentische Aromastoffe oder künstliche Aromastoffe. Die naturidentischen Aromastoffe folgen einem Vorbild in der Natur und entsprechen in ihrer Molekularstruktur ebendiesem Vorbild, z. B. synthetisch hergestelltes Vanillin. Künstliche Aromastoffe hingegen haben kein Vorbild in der Natur.

Natürliche Aromastoffe sind Aromastoffe, die durch physikalische (z. B. Destillation und Extraktion), enzymatische oder mikrobiologische Verfahren gewonnen werden. Ausgangsmaterialien für die Herstellung können pflanzlichen, tierischen oder mikrobiologischen (z. B. Hefen) Ursprungs sein.

Das erfindungsgemäße Verfahren eignet sich besonders für die Gewinnung natürlicher Aromastoffe, die gemäß einer bevorzugten Ausführungsform aus pflanzlichen Rohstoffen durch Extraktion oder Fermentation stammen.

Unter dem Begriff "Porendurchmesser" wird der maximale Durchmesser einer theoretischen Kugel verstanden, die in die Mikroporen des Molekularsiebs eingebettet werden kann. Unter dem Begriff "Moleküldurchmesser" wird der Durchmesser des maximalen Projektionsdurchmessers eines Moleküls verstanden.

Im Rahmen der vorliegenden Erfindung liegt der Porendurchmesser des Molekularsiebs bei höchstens 8 Å, bevorzugt bei höchstens 7,5 Å, weiter bevorzugt bei höchstens 7 Å und am meisten bevorzugt bei höchstens 6,5 Å. Es ist insbesondere bevorzugt, wenn der Porendurchmesser des Molekularsiebs in einem Bereich gewählt wird, der unterhalb des Moleküldurchmessers der in der gasförmigen Zusammensetzung enthaltenen Aromastoffe liegt, wobei es besonders bevorzugt ist, dass mindestens 90 Gew.-% (bezogen auf das Gesamtgewicht der in der gasförmigen Zusammensetzung enthaltenen Aromastoffe) der in der gasförmigen Zusammensetzung enthaltenen Aromastoffe einen Moleküldurchmesser aufweisen, der größer als der Porendurchmesser des Molekularsiebs ist, bevorzugter mindestens 95 Gew.-%, weiter bevorzugt mindestens 97 Gew.-%, insbesondere bevorzugt mindestens 98 Gew.-%, ebenfalls bevorzugt mindestens 99 Gew.-% und am meisten bevorzugt 100 Gew.-%. In einer weiteren bevorzugten Ausführungsform wird der Porendurchmesser des Molekularsiebs im Bereich von 5 bis 8 Å, bevorzugter 5,5 bis 7 Å, weiter bevorzugt 6 bis 6,5 Å gewählt. Ebenfalls bevorzugt ist ein Bereich von 5 bis 6,5 Å. Dabei ist es besonders bevorzugt den Porendurchmesser des Molekularsiebs in einem Bereich von 5 bis 8 Ä, bevorzugt 5,5 bis 7 Ä zu wählen, wenn mindestens 90 Gew.-%, bevorzugt mindestens 95 Gew.-%, insbesondere bevorzugt mindestens 97 Gew.-% und am meisten bevorzugt mindestens 99 Gew.-% der in der gasförmigen Zusammensetzung enthaltenen Aromastoffe einen Moleküldurchmesser von 8 bis 18 Å oder 9 bis 16 Å aufweisen. Das erfindungsgemäße Verfahren eignet sich insbesondere, um Aromastoffe zu gewinnen, die in einer Flüssigkeit enthalten sind. Demnach umfasst das erfindungsgemäße Verfahren desweiteren den Schritt
- (A0): Anreicherung einer gasförmigen Zusammensetzung mit mindestens einem Aromastoff durch In-Kontakt-Bringen der gasförmigen Zusammensetzung mit einer Flüssigkeit enthaltend den mindestens einen Aromastoff.

Das In-Kontakt-Bringen gemäß Schritt (A0) erfolgt vor dem In-Kontakt-Bringen gemäß Schritt (A1). Das in-Kontakt-Bringen gemäß Schritt (A0) kann auf jegliche Art und Weise erfolgen, die dem Fachmann als für das erfindungsgemäße Verfahren geeignet bekannt ist. Bevorzugt erfolgt das in-Kontakt-Bringen gemäß Schritt (A0) durch Durchleiten der gasförmigen Zusammensetzung durch die Flüssigkeit, besonders bevorzugt ist dabei die dem Fachmann bekannte Methode des Gas-Stripping, oder durch Pervaporation. Das Gas-Stripping wird vorzugsweise bei einem Druck zwischen 10 und 200 kPa (0,1 und 2 bar) besonders bevorzugt zwischen 50 und 110 kPa (0,5 und 1,1 bar) durchgeführt. Besonders bevorzugt ist ein Stripping bei Unterdruck.

Um ein effizientes Gas-Stripping zu erzielen, werden die Gasblasen vorzugsweise dispergiert. Dies kann mit einem Rührer erfolgen, der so angeordnet ist, dass feine Blasen des Trägergases entstehen.

Außerdem ist es bevorzugt, das In-Kontakt-Bringen in einer Säule durchzuführen, in der durch geeignete Einbauten oder Füllkörper eine große Stoffaustauschfläche erzielt wird. Besonders bevorzugt bewegen sich dabei Flüssigkeit und Gasstrom im Gegenstrom zueinander, also in gegensätzliche Richtungen.

Bei der in Schritt (A0) genannten Flüssigkeit handelt es sich gemäß einer bevorzugten Ausführungsform der vorliegenden Erfindung um eine Flüssigkeit pflanzlichen Ursprungs, wobei jede Flüssigkeit pflanzlichen Ursprungs eingesetzt werden kann, die dem Fachmann als für das erfindungsgemäße Verfahren geeignet bekannt ist. In einer bevorzugten Ausführungsform handelt es sich bei der Flüssigkeit pflanzlichen Ursprungs um ein Extrakt, das beispielsweise durch Pressen pflanzlichen Rohmaterials entstanden ist.

Ebenfalls möglich ist, dass vor, während oder nach dem Pressen, dem pflanzlichen Ursprungsmaterial mindestens ein Enzym oder eine Enzymmischung zugesetzt wird.

Erfindungsgemäss handelt es sich bei der Flüssigkeit um Fruchtsaft. Es kann eine Pressung oder einen Extrakt aus Apfel, Birne, Orange, Mango, Kirsche, Heidelbeere, Johannisbeere, Maracuja, Lychee, Guave, Erdbeere, Himbeere, Brombeere, Stachelbeere, Tomate, Mirabelle, Aprikose, Pfirsich, Traube, Melone, Pflaume, Zwetschge, Karotte und/oder Schlehe sein. Es ist im Rahmen der vorliegenden Erfindung ebenfalls möglich, dass es sich bei dem pflanzlichen Rohmaterial um ein Material handelt, das Stärke, Cellulose, Hemicellulose, und/oder Lignin enthält.

Auch sind Mischungen aller vorgenannten pflanzlichen Rohmaterialien im Rahmen der vorliegenden Erfindung geeignet.

Ebenfalls erfindungsgemäss handelt es sich bei der in Schritt (A0) genannten Flüssigkeit um eine fermentierte Flüssigkeit. Besonders geeignet sind Fermentationsflüssigkeiten, die durch Fermentation eines geeigneten Fermentationsmediums, welches eine Kohlenstoffquelle (z.B. Glucose) und gegebenenfalls eine Stickstoffquelle (z.B. Ammoniak) enthält, mit beispielsweise einer oder mehreren Hefen, Bakterien oder Pilzen entstanden ist. Besonders bevorzugt sind die Hefen *Saccharomyces cerevisiae,* oder Mikroorganismen mit ähnlichen Fermentationseigenschaften wie beispielsweise *Pichia stipitis, Pichia segobiensis, Candida shehatae, Candida tropicalis, Candida boidinii, Candida tenuis, Pachysolen tannophilus, Hansenula polymorpha, Candida famata, Candida parapsilosis, Candida rugosa, Candida sonorensis, Issatchenkia terricola, Kloeckera apis, Pichia barkeri, Pichia cactophila, Pichia deserticola, Pichia norvegensis, Pichia membranaefaciens, Pichia mexicana, Torulaspora delbrueckii, Candida bovina, Candida picachoensis, Candida emberorum, Candida pintolopesii, Candida thermophila, Kluyveromyces marxianus, Kluyveromyces fragilis, Kazachstania telluris, Issatchenkia orientalis, Lachancea thermotolerans, Clostridium thermocellum, Clostridium thermohydrosulphuricum, Clostridium thermosaccharolyticium, Thermoanaerobium brockii, Thermobacteroides acetoethylicus, Thermoanaerobacter ethanolicus, Clostridium thermoaceticum, Clostridium thermoautotrophicum, Acetogenium kivui, Desulfotomaculum nigrificans,* und *Desulfovibrio thermophilus, Thermoanaerobacter tengcongensis, Bacillus stearothermophilus* und *Thermoanaerobacter mathranii.* Geeignete Fermentationsmedien sind Medien auf Basis von Wasser, die pflanzliches Rohmaterial enthalten oder aus diesem bestehen. Als pflanzliches Rohmaterial werden im Rahmen der vorliegenden Erfindung bevorzugt eine oder mehrere Früchte oder Gemüse eingesetzt wobei Apfel, Birne, Orange, Mango, Kirsche, Heidelbeere, Johannisbeere, Maracuja, Lychee, Guave, Erdbeere, Himbeere, Brombeere, Stachelbeere, Tomate, Mirabelle, Aprikose, Pfirsich, Granatapfel, Kokosnuss, Traube, Melone, Pflaume, Zwetschge, Karotte und/oder Schlehe besonders bevorzugt sind. Besonders bevorzugt wird im Rahmen der vorliegenden Erfindung eine Flüssigkeit eingesetzt, die durch Pressung und anschließende Fermentation von einem oder mehreren der vorgenannten Früchte oder Gemüse entstanden ist. Es ist insbesondere bevorzugt, wenn es sich bei der in Schritt (A0) genannten Flüssigkeit um Fruchtsaft handelt. Unter dem Begriff "Fruchtsaft" wird im Rahmen der vorliegenden Erfindung ein aus Früchten einer oder mehrerer Fruchtarten gewonnenes, flüssiges Erzeugnis verstanden. Die Bezeichnung "Fruchtsaft" umfasst im Rahmen der vorliegenden Erfindung Direktsaft und Fruchtsaft aus Fruchtsaftkonzentrat. Bei Letzterem wird Fruchtsaft beispielsweise im Herkunftsland konzentriert und im Zielland rückverdünnt, um Transportkosten zu sparen. Ebenfalls geeignet sind im Rahmen der vorliegenden Erfindung jedoch auch Fruchtnektare und Fruchtsaftgetränke, bei denen weitere Zutaten zugesetzt sein können.

Ein Vorteil dieser Ausführungsform des erfindungsgemäßen Verfahrens besteht darin, dass das während einer Fermentation gebildete Kohlendioxid direkt als gasförmige Zusammensetzung gemäß Schritt (A0) verwendet werden kann.

Die Fermentation erfolgt bevorzugt in einem Rührkessel-, oder in einem Schlaufenreaktor oder in einem Air-Lift-Reaktor. Zudem ist der Gasaustausch auch über eine mit dem Fermenter verbundene, externe Gas-Stripping-Säule möglich, die kontinuierlich mit der Fermentationslösung gespeist wird und deren Auslass wieder zurück in den Fermenter geführt wird. Besonders bevorzugt wird eine solche externe Gas-Stripping-Säule im Gegenstrom und/oder in Kombination mit Füllkörpern für einen erhöhten Stoffaustausch, wie z.B. Raschigringen betrieben.

Die spezifische Begasungsrate liegt vorzugsweise zwischen 0,1 und 10 vvm, besonders bevorzugt zwischen 0,5 und 5 vvm.

Das erfindungsgemäße Verfahren ist besonders vorteilhaft, wenn es sich bei der Flüssigkeit gemäß Schritt (A0) um eine Flüssigkeit handelt, die mindestens einen kurzkettigen Alkohol enthält, wie beispielsweise eine durch Hefe(n) fermentierte Flüssigkeit oder einen alkoholischen Extrakt. Wird das erfindungsgemäße Verfahren unter Verwendung derartiger Flüssigkeiten durchgeführt, so können im Rahmen von Schritt (A1) des erfindungsgemäßen Verfahrens ein Großteil der in der Flüssigkeit enthaltenen kurzkettigen Alkohole entfernt werden. In einer besonders bevorzugten Ausführungsform werden dabei mindestens 50% der in der Flüssigkeit vorhandenen kurzkettigen Alkohole an den Adsorber gebunden, bevorzugter mindestens 70%, weiter bevorzugt mindestens 80%, insbesondere mindestens 90%, ebenfalls bevorzugt mindestens 95% und am meisten bevorzugt 99%. Ebenfalls bevorzugt ist es, wenn im Rahmen des erfindungsgemäßen Verfahrens sämtliche in der Flüssigkeit vorhandenen, kurzkettigen Alkohole entfernt werden.

Das erfindungsgemäße Verfahren bietet weiterhin den Vorteil, dass an den Adsorber gebundene Moleküle auf einfache und ökonomisch sinnvolle Art und Weise abgetrennt und rückgewonnen werden können. Sofern in der in Schritt (A0) genannten Flüssigkeit mindestens ein kurzkettiger Alkohol enthalten ist, kann das erfindungsgemäße Verfahren somit in besonders vorteilhafter Art und Weise zur Gewinnung des mindestens einen kurzkettigen Alkohols eingesetzt werden. Bevorzugt erfolgt die Rückgewinnung des/der an den Adsorber gebundenen Moleküls/Moleküle durch Desorption.

Es ist insbesondere möglich eine selektive Desorption des/der an den Adsorber gebundenen Moleküls/Moleküle, wie beispielsweise einem kurzkettigen Alkohol, vom Adsorbens durch Erhöhung der Temperatur und / oder Verringerung des Drucks innerhalb der Säule durchzuführen. In einer bevorzugten Ausführungsform des Verfahrens wird die thermische Energie über die Säulenwand und ggf. zusätzlich über die Heizwendeln im Inneren der Säule direkt auf die Adsorbenspackung eingebracht. Bevorzugt sind Temperaturen zwischen 25 und 300°C und Absolutdrücke zwischen 0 und 1000 kPa (0 und 10 bar) Besonders bevorzugt sind Temperaturen zwischen 40 und 180°C, sowie Absolutdrücke bei Unterdruck, vorzugsweise zwischen und 100 kPa (0,01 und 1 bar).

Bevorzugt wird für den Austrag des desorbierten Moleküls/Moleküle aus der Säule ein Trägergas verwendet. Es ist möglich, das gleiche inerte Trägergas zu verwenden, welches auch im Rahmen des Schritts (A0) des erfindungsgemäßen Verfahrens eingesetzt wird. Ebenfalls bevorzugt werden die Temperatur und der Absolutdruck des Trägergases entsprechend den oben beschriebenen Temperaturen und Absolutdrücken innerhalb der Säule eingestellt. Für diesen Zweck eignen sich vorgeschaltete Wärmetauscher und / oder Drosseln beziehungsweise Kompressoren.

Die Desorption kann im Wirbelschichtbetrieb durchgeführt werden.

Weiterhin kann die Desorption
(a) durch Verdrängung mittels anderer Komponenten;
(b) thermisch, d.h. durch Erhöhung der Temperatur des Adsorptionsmittels (Temperature-Swing-Adsorptionsverfahren (TSA));
(c) durch das sogenannte Pressure-Swing-Adsorptionsverfahren (PSA), d.h. durch Absenkung des Druckes;
(d) durch eine Kombination der in (a) bis (c) genannten Verfahren
erfolgen.

Ebenfalls bevorzugt kann bei der Desorption ein Spülgas verwendet werden. Bevorzugte Spülgase sind inerte Gase, besonders bevorzugt sind die Spülgase Luft, Kohlenstoffdioxid, Stickstoff, Edelgase oder Mischungen daraus. Es ist weiterhin möglich, dass das Spülgas Wasser enthält. Besonders bevorzugt liegt die Temperatur des Spülgases oberhalb der Temperatur des Verbundmaterials. Weiterhin bevorzugt ist die Strömungsrichtung bei der Desorption umgekehrt zur Strömungsrichtung des Fluids bei der Adsorption d.h. sodass die Desorption entgegen dem bei der Adsorption entstandenen Gradienten der Konzentration der an dem Verbundmaterial adsorbierten organischen Komponente erfolgt.

Das erfindungsgemäße Verfahren eignet sich desweiteren besonders bevorzugt, um durch das nach Schritt (A1) des Verfahrens gewonnene Aromastoffe in Produkte, insbesondere fluide Produkte wie beispielsweise Flüssigkeiten, zu überführen. Daher umfasst das erfindungsgemäße Verfahren den Schritt
- (A2): In-Kontakt-Bringen der gasförmigen Zusammensetzung gemäß Schritt (A1) mit einer Flüssigkeit.

Das In-Kontakt-Bringen gemäß Schritt (A2) erfolgt nach dem In-Kontakt-Bringen gemäß Schritt (A1). Das In-Kontakt-Bringen gemäß Schritt (A2) kann auf jegliche Art und Weise erfolgen, die dem Fachmann als für das erfindungsgemäße Verfahren geeignet bekannt ist. Bevorzugt erfolgt das In-Kontakt-Bringen gemäß Schritt (A2) durch Durchleiten der gasförmigen Zusammensetzung durch die Flüssigkeit. Das Durchleiten erfolgt dabei bevorzugt im Gegenstrom.

Damit ermöglicht das erfindungsgemäße Verfahren die Gewinnung von Aromastoffen, die auf einfache und ökonomisch sinnvolle Weise beispielsweise in Lebensmittelprodukten eingesetzt werden können.

Im Rahmen einer besonders bevorzugten Ausführungsform handelt es sich bei der in Schritt (A2) genannten Flüssigkeit um eine Flüssigkeit wie sie zuvor definiert wurde. Dabei ist es im Rahmen der vorliegenden Erfindung insbesondere möglich, dass es sich bei den in Schritt (A0) und (A2) genannten Flüssigkeiten um unterschiedliche oder dieselbe Flüssigkeit handelt. Das erfindungsgemäße Verfahren ermöglicht somit auch das Auf- oder Abkonzentrieren einzelner Aromastoffe und/oder Schlüsselaromastoffe innerhalb einer Flüssigkeitsart. Beispielsweise können durch eine Kombination der Schritte (A0), (A1) und (A2) einer ersten Charge Orangensaft durch entsprechende Wahl des Molekularsiebs bestimmte Aromastoffe entzogen werden und die so gewonnenen Aromastoffe einer weiteren Charge Orangensaft (Direktsaft oder Saft aus Orangensaftkonzentrat) oder direkt Orangensaftkonzentrat zugesetzt werden. Ebenfalls möglich ist ein Aromablending, d.h. Aromastoffe die einer Flüssigkeitsart gezielt entzogen werden, können einer zweiten Flüssigkeitsart zugeführt werden. Ein weiterer Vorteil des erfindungsgemäßen Verfahrens besteht darin, dass - sofern es sich bei der Flüssigkeit enthaltend den mindestens einen Aromastoff beispielsweise um fermentierten Fruchtsaft handelt - durch Wahl der Porengröße des Adsorbers von höchstens 8Å, bevorzugt im Bereich von 5 bis 8Å, besonders bevorzugt im Bereich von 5 bis 6,5Ä, einerseits der in der fermentierten Flüssigkeit enthaltende Alkohol, bei dem es sich vorwiegend um Ethanol und Methanol handelt, durch Adsorption an den Adsorber abgetrennt werden kann, jedoch gleichzeitig wichtige Schlüsselaromen des Fruchtsafts in der gasförmigen Zusammensetzung verbleiben und entweder direkt wieder derselben oder einer weiteren Flüssigkeit zugesetzt werden können. Für den Fall, dass es sich bei der fermentierten Flüssigkeit um fermentierten Orangensaft (Direktsaft oder Saft aus Orangensaftkonzentrat) oder Orangensaftkonzentrat handelt, ist das erfindungsgemäße Verfahren besonders vorteilhaft, um die Schlüsselaromen von Orangensaft umfassend (S)-Ethyl-2-methylbutanoat, Ethylbutanoat, (Z)-3-Hexenal, Ethyl-2-methylpropanoat, (R)-Limonen, (R)-α-Pinen, Myrcen, tr-4,5-Epoxy-(E)-2-decenal, Hexanal, Ethylhexanoat und Linalool zu gewinnen. Sofern es sich bei der fermentierten Flüssigkeit um fermentierten Apfelsaft (Direktsaft oder Saft aus Apfelsaftkonzentrat) oder Apfelsaftkonzentrat handelt, ist das erfindungsgemäße Verfahren besonders vorteilhaft, um die Schlüsselaromen von Apfelsaft umfassend Ethyl-isobutyrat, Ethylbutyrat, Methyl-2-methylbutyrat, Methyl-hexanoat, Ethylcaproat, Hexylacetat, Hexyl-2-methylbutyrat und Hexanal zu gewinnen.

Desweiteren ist es möglich, die durch das erfindungsgemäße Verfahren gewonnenen Aromastoffe zu kondensieren. Die Kondensation kann dabei auf jede Art und Weise erfolgen, die dem Fachmann als für den erfindungsgemäßen Zweck geeignet bekannt ist, bevorzugt erfolgt die Kondensation durch Abkühlung der gasförmigen Zusammensetzung, die den mindestens einen Aromastoff enthält.

Ebenfalls möglich ist es, die durch das erfindungsgemäße Verfahren gewonnenen Aromastoffe in kondensierter Form einem gewünschten Produkt zuzusetzen.

Desweiteren umfasst das erfindungsgemäße Verfahren daher in einer bevorzugten optionalen Ausführungsform den Schritt
- (A1a): Kondensieren der gasförmigen Zusammensetzung enthaltend den mindestens einen Aromastoff vor dem in-Kontakt-Bringen mit einer Flüssigkeit gemäß Schritt (A2).

Das Kondensieren gemäß Schritt (A1a) erfolgt dabei nach Schritt (A1) des erfindungsgemäßen Verfahrens.

Weiterhin ist es im Rahmen des erfindungsgemäßen Verfahrens bevorzugt, wenn der Schritt (A0), (A1), (A1a) und/oder (A2) mindestens einmal wiederholt wird. Dabei ist es insbesondere bevorzugt, wenn mindestens der Schritt (A0) und (A1) ein- oder mehrfach wiederholt werden.

Im Folgenden werden weitere, nicht beanspruchte Ausführungsformen beschrieben, die den Rahmen der vorliegenden Anmeldung jedoch in keiner Weise beschränken, sondern lediglich die besonderen Vorteile des erfindungsgemäßen Verfahrens weiter verdeutlichen sollen.

Demnach umfasst eine Ausführungsform ein Verfahren zur Gewinnung von Aromastoffen, die in mindestens einer Flüssigkeit enthalten sind, umfassend die Schritte
- (A0): Anreicherung einer gasförmigen Zusammensetzung mit mindestens einem Aromastoff durch In-Kontakt-Bringen der gasförmigen Zusammensetzung mit einer Flüssigkeit enthaltend den mindestens einen Aromastoff;
- (A1): In-Kontakt-Bringen der gasförmigen Zusammensetzung enthaltend mindestens einen Aromastoff gemäß Schritt (A0) mit einem Adsorber, wobei der Adsorber ein Molekularsieb mit einem Porendurchmesser von höchstens 8 Ä umfasst.

Desweiteren umfasst eine weitere Ausführungsform ein Verfahren zur Gewinnung von Aromastoffen, die in mindestens einer Flüssigkeit enthalten sind, umfassend die Schritte
- (A0): Anreicherung einer gasförmigen Zusammensetzung mit mindestens einem Aromastoff durch In-Kontakt-Bringen der gasförmigen Zusammensetzung mit einer Flüssigkeit enthaltend den mindestens einen Aromastoff;
- (A1): In-Kontakt-Bringen der gasförmigen Zusammensetzung enthaltend mindestens einen Aromastoff gemäß Schritt (A0) mit einem Adsorber, wobei der Adsorber ein Molekularsieb mit einem Porendurchmesser von höchstens 8 Å umfasst,
wobei es insbesondere bevorzugt ist, wenn es sich bei dem Adsorber um einen Zeolithen handelt und/oder es desweiteren bevorzugt ist, wenn es sich bei der Flüssigkeit um eine Flüssigkeit pflanzlichen Ursprungs handelt und/oder das In-Kontakt-Bringen gemäß Schritt (A0) durch Durchleiten der gasförmigen Zusammensetzung durch die Flüssigkeit, besonders bevorzugt durch Gas-Stripping oder Pervaporation erfolgt. Insbesondere bevorzugt ist es, wenn es sich bei der Flüssigkeit um eine fermentierte Flüssigkeit oder eine durch alkoholische Extraktion erzeugte Flüssigkeit pflanzlichen Ursprungs handelt. Hierbei ist es desweiteren besonders bevorzugt, wenn es sich bei der Flüssigkeit um fermentierten Orangensaft (Direktsaft oder Saft aus Orangensaftkonzentrat) oder fermentiertes Orangensaftkonzentrat handelt.

Ebenfalls besonders bevorzugt ist es, wenn der durch das vorstehend beschriebene Verfahren gewonnene mindestens eine Aromastoff auf einfache Art und Weise einem gewünschten Endprodukt, beispielsweise einem Lebensmittelprodukt, zugesetzt wird. Demnach umfasst das beschriebene Verfahren in einer weiteren besonders bevorzugten Ausführungsform den Schritt
- (A2): In-Kontakt-Bringen der gasförmigen Zusammensetzung gemäß Schritt (A1) mit einer Flüssigkeit
wobei es sich bei der in Schritt (A2) genannten Flüssigkeit bevorzugt um Fruchtsaft handelt. Führt man die Schritte (A0), (A1) und (A2) in konsekutiver Weise ausgehend von einer fermentierten Flüssigkeit pflanzlichen Ursprungs durch und handelt es sich bei der in Schritt (A0) und (A2) genannten Flüssigkeit um dieselbe Flüssigkeit, so ist es möglich, einerseits kurzkettige Alkohole aus der fermentierten Flüssigkeit abzureichern, indem diese an den Adsorber gebunden werden und andererseits die mit der gasförmigen Zusammensetzung aus der Flüssigkeit in Schritt (A0) ausgetragenen Aromastoffe nach Abreicherung der kurzkettigen Alkohole wieder in die Flüssigkeit rückzuführen. Als Endprodukt kann man durch diese Adaption des erfindungsgemäßen Verfahrens beispielsweise einen Fruchtsaft erhalten, der sich von dem ursprünglichen, durch Pressung gewonnenen Produkt durch einen Mindergehalt an Zuckern unterscheidet, jedoch keine Beeinträchtigungen bei dem Gehalt der Aromastoffe aufweist.

Desweiteren eignet sich das erfmdungsgemäße Verfahren zur Abreicherung von Zucker bei gleichzeitig weitgehendem Erhalt der Geschmacks- und Aromaeigenschaften einer Flüssigkeit, die Zucker und Aromastoffe enthält, wobei ein solches Verfahren bevorzugt die Schritte umfasst:
- (Z1): Fermentation eines Teils des oder des gesamten in der Flüssigkeit enthaltenen Zuckers zu kurzkettigen Alkoholen mittels Mikroorganismen, bevorzugt durch Zugabe von *Saccharomyces cerevisiae* und anschließende Inkubation,
- (A0): Anreicherung einer gasförmigen Zusammensetzung mit mindestens einem Aromastoff durch In-Kontakt-Bringen der gasförmigen Zusammensetzung mit der fermentierten Flüssigkeit gemäß Schritt (Z1).
- (A1): In-Kontakt-Bringen der gasförmigen Zusammensetzung enthaltend kurzkettige Alkohole und mindestens einen Aromastoff gemäß Schritt (A0) mit einem Adsorber, wobei der Adsorber ein Molekularsieb mit einem Porendurchmesser von höchstens 8 Å umfasst,
- (A1.1): selektive Adsorption in der gasförmigen Zusammensetzung enthaltener kurzkettiger Alkohole an den Adsorber und
- (A2): In-Kontakt-Bringen der gasförmigen Zusammensetzung mit der fermentierten Flüssigkeit gemäß Schritt (Z1),
wobei es insbesondere bevorzugt ist, wenn es sich bei dem Adsorber um einen Zeolithen handelt und/oder es desweiteren bevorzugt ist, wenn es sich bei der Flüssigkeit um eine Flüssigkeit pflanzlichen Ursprungs handelt und/oder das In-Kontakt-Bringen gemäß Schritt (A0) durch Durchleiten der gasförmigen Zusammensetzung durch die Flüssigkeit, besonders bevorzugt durch Gas-Stripping oder Pervaporation erfolgt. Insbesondere bevorzugt ist es, wenn der oder die kurzkettigen Alkohol(e) zur Regenerierung des Adsorbers separat desorbiert und gesammelt wird/werden. Weiterhin ist insbesondere bevorzugt, dass die kurzkettigen Alkohole zu mindestens 90 Gew.-%, besonders bevorzugt zu mindestens 95 Gew.-% aus Ethanol bestehen. Die Inkubation erfolgt bevorzugt bei einer Temperatur zwischen 30 und 40 °C unter anaeroben Bedingungen. Desweiteren ist es bevorzugt, dass die Schritte (Z1), (A0), (A1), (A1.1) und/oder (A2) mindestens einfach, bevorzugt mindestens 5fach wiederholt werden, wobei der mindestens eine Aromastoff zurück in die Flüssigkeit geführt wird. Besonders bevorzugt ist es, wenn durch die Wiederholung der einzelnen Schritte eine kontinuierliche Verfahrensführung erreicht wird.

### Beispiele

Im Folgenden wird die vorliegende Erfindung durch das Heranziehen von Beispielen näher erläutert. Es wird betont, dass auch die Beispiele lediglich veranschaulichenden Charakter besonderer Ausführungsformen besitzen und den Rahmen der vorliegenden Anmeldung in keinster Weise beschränken.

### Beispiel 1 - Gewinnung von Hexanal aus einem Gasstrom (nicht erfindungsgemäss)

Ein Gasstrom bestehend aus 0,05% (mol/mol) Hexanal, 0,95% (mol/mol) Ethanol und 99% (mol/mol) Stickstoff wurde 1 Stunde lang bei 130°C, einem Gasvolumenstrom von 3 L/min und einem Druck von 100 kPa (1 bar) durch eine Glassäule (Gassner Glastechnik, Deutschland) geleitet, welche mit 400 g Zeolith-Formkörper (ZSM-5, H-Form, SiO2/Al2O3=1000; inertes Bindemittel, Hersteller: Clariant AG) gefüllt war. Die Konzentrationen von Hexanal und Ethanol im Gasstrom wurde nach Passieren der Säule online mittels eines Gaschromatografen quantifiziert.

### Beispiel 2 -Einsatz von fermentiertem Apfelsaft

0,75 Liter eines fermentierten Apfelsafts, der 65 g/L Ethanol enthält, wurde bei 45 °C mit einem Luftstrom von 0,75 L/min begast. Mittels einer Membranpumpe (KNF Neuberger, Deutschland) und einem Volumenstromregler (Swagelok, Deutschland) wurde der Luftstrom durch eine Glassäule geleitet (Gassner Glastechnik, Deutschland), welche mit 400 g Zeolith-Formkörper (ZSM-5, H-Form, SiO₂/Al₂O₃=1000; inertes Bindemittel, Hersteller: Clariant AG) gefüllt war. Der an Ethanol abgereicherte Gasstrom wurde zurückgeführt. Nach 48 Stunden wurde der Versuch abgebrochen und die verbliebene Ethanol-Konzentration in der Vorlage gaschromatografisch quantifiziert.

### Beispiel 3 -Einsatz von fermentiertem Orangensaft

0,5 Liter eines fermentierten Orangensafts, der 33 g/L Ethanol enthält, wurde bei 35 °C mit einem Luftstrom von 0,5 L/min begast. Mittels einer Membranpumpe (KNF Neuberger, Deutschland) und einem Volumenstromregler (Swagelok, Deutschland) wurde der Luftstrom durch eine Glassäule geleitet (Gassner Glastechnik, Deutschland), welche mit 400 g Zeolith-Formkörper (ZSM-5, H-Form, SiO₂/Al₂O3=1000; inertes Bindemittel, Hersteller: Clariant AG) gefüllt war. Der an Ethanol abgereicherte Gasstrom wurde zurückgeführt. Nach 48 Stunden wurde der Versuch abgebrochen und die verbliebene Ethanol-Konzentration in der Vorlage gaschromatografisch quantifiziert.

## Patentansprüche

1. Verfahren zur Gewinnung von Aromastoffen umfassend die Schritte
(A0) Anreicherung einer gasförmigen Zusammensetzung mit mindestens einem Aromastoff durch In-Kontakt-Bringen der gasförmigen Zusammensetzung mit einer Flüssigkeit enthaltend den mindestens einen Aromastoff;
(A1) In-Kontakt-Bringen der gasförmigen Zusammensetzung enthaltend den mindestens einen Aromastoff mit einem Adsorber, wobei der Adsorber ein Molekularsieb mit einem Porendurchmesser von höchstens 8 Å umfasst;
(A2) In-Kontakt-Bringen der gasförmigen Zusammensetzung gemäß Schritt (A1) mit einer Flüssigkeit,
wobei es sich bei der Flüssigkeit enthaltend den mindestens einen Aromastoff um Fruchtsaft und/oder eine fermentierte Flüssigkeit handelt.

2. Verfahren nach Anspruch 1, wobei das Molekularsieb bei einer Temperatur von 40°C und einem Druck von 101,3 kPa (1,013 bar) absolut mindestens die zweifache Menge an kurzkettigen Alkoholen im Vergleich zu Wasser aus einer wässrigen alkoholischen Lösung bindet, wenn es sich bei der wässrigen alkoholischen Lösung um einen wässrige Lösung von mindestens 50 g/L des kurzkettigen Alkohols handelt.

3. Verfahren nach Anspruch 2, wobei mindestens 50% der in der wässrigen alkoholischen Lösung vorhandenen, kurzkettigen Alkohole an das Molekularsieb gebunden werden.

4. Verfahren nach einem der vorhergehenden Ansprüche, wobei das Molekularsieb einen Zeolithen mit einem SiO₂/Al₂O₃ molaren Verhältnis von mindestens 50 umfasst.

5. Verfahren nach einem der vorhergehenden Ansprüche, wobei das Molekularsieb einen Porendurchmesser im Bereich von 5 bis 6,5 Å aufweist.

6. Verfahren nach einem der vorhergehenden Ansprüche, wobei es sich bei der Flüssigkeit gemäß Schritt (A2) um eine Flüssigkeit pflanzlichen Ursprungs, Fruchtsaft und/oder eine fermentierte Flüssigkeit handelt.

7. Verfahren nach einem der vorhergehenden Ansprüche, wobei es sich bei der Flüssigkeit enthaltend den mindestens einen Aromastoff und die Flüssigkeit gemäß Schritt (A2) um dieselbe oder eine unterschiedliche Flüssigkeit handelt.

8. Verfahren nach einem der vorhergehenden Ansprüche, wobei der Schritt (A0), (A1) und/oder (A2) mindestens einmal wiederholt wird.

## Claims

1. Method for obtaining flavourings comprising the steps of
(A0) enriching a gaseous composition with at least one flavouring by contacting the gaseous composition with a liquid containing the at least one flavouring;
(A1) contacting the gaseous composition containing at least one flavouring with an adsorber, wherein the adsorber comprises a molecular sieve having a pore diameter of at most 8 Å;
(A2) contacting the gaseous composition according to step (A1) with a liquid,
wherein the liquid containing the at least one flavouring is fruit juice and/or a fermented liquid.

2. Method according to Claim 1, wherein the molecular sieve, at a temperature of 40°C and a pressure of 101.3 kPa (1.013 bar) absolute, binds at least twice the amount of short-chain alcohols in comparison with water from an aqueous alcoholic solution, when the aqueous alcoholic solution is an aqueous solution of at least 50 g/l of the short-chain alcohol.

3. Method according to Claim 2, wherein at least 50% of the short-chain alcohols present in the aqueous alcoholic solution are bound to the molecular sieve.

4. Method according to any one of the preceding claims, wherein the molecular sieve comprises a zeolite having an SiO₂/Al₂O₃ molar ratio of at least 50.

5. Method according to any one of the preceding claims, wherein the molecular sieve has a pore diameter in the range from 5 to 6.5 Å.

6. Method according to any one of the preceding claims, wherein the liquid according to step (A2) is a liquid of plant origin, fruit juice and/or a fermented liquid.

7. Method according to any one of the preceding claims, wherein the liquid containing the at least one flavouring and the liquid according to step (A2) are the same or different liquids.

8. Method according to any one of the preceding claims, wherein the step (A0), (A1) and/or (A2) is repeated at least once.

## Revendications

1. Procédé pour l'obtention de matières aromatiques comprenant les étapes
(A0) enrichissement d'une composition gazeuse avec au moins une matière aromatique par mise en contact de la composition gazeuse avec un liquide contenant l'au moins une matière aromatique ;
(A1) mise en contact de la composition gazeuse contenant l'au moins une matière aromatique avec un adsorbant, l'adsorbant comprenant un tamis moléculaire doté d'un diamètre de pores d'au plus 8 Å ;
(A2) mise en contact de la composition gazeuse selon l'étape (A1) avec un liquide,
le liquide contenant l'au moins une matière aromatique étant un jus de fruit et/ou un liquide fermenté.

2. Procédé selon la revendication 1, le tamis moléculaire, à une température de 40 °C et une pression de 101,3 kPa (1,013 bar) absolue, liant au moins la quantité double d'alcools à chaîne courte par rapport à l'eau à partir d'une solution alcoolique aqueuse, lorsque la solution alcoolique aqueuse est une solution aqueuse d'au moins 50 g/L de l'alcool à chaîne courte.

3. Procédé selon la revendication 2, au moins 50 % des alcools à chaîne courte présents dans la solution alcoolique aqueuse étant liés au tamis moléculaire.

4. Procédé selon l'une quelconque des revendications précédentes, le tamis moléculaire comprenant une zéolithe dotée d'un rapport molaire SiO₂/Al₂O₃ d'au moins 50.

5. Procédé selon l'une quelconque des revendications précédentes, le tamis moléculaire présentant un diamètre de pores dans la plage de 5 à 6,5 Å.

6. Procédé selon l'une quelconque des revendications précédentes, le liquide selon l'étape (A2) étant un liquide d'origine végétale, un jus de fruit et/ou un liquide fermenté.

7. Procédé selon l'une quelconque des revendications précédentes, le liquide contenant l'au moins une matière aromatique et le liquide selon l'étape (A2) étant les mêmes ou étant un liquide différent.

8. Procédé selon l'une quelconque des revendications précédentes, l'étape (A0), (A1) et/ou (A2) étant répétée au moins une fois.
